# EUROPEAN PATENT SPECIFICATION

(11) **EP 1 869 613 B1**
(45) Date of publication and mention of the grant of the patent: **02.05.2012**
(21) Application number: 06725882.2
(22) Date of filing: 18.04.2006
(51) Int. Cl.: G06K 19/067

(54) **METHOD FOR MARKING OBJECTS WHICH CAN BE READ ELECTROMAGNETICALLY**
VERFAHREN ZUM MARKIEREN VON OBJEKTEN, DIE ELEKTROMAGNETISCH GELESEN WERDEN KÖNNEN
PROCEDE POUR MARQUER DES OBJETS QUI PEUVENT ETRE LUS ELECTROMAGNETIQUEMENT

(30) Priority: 15.04.2005 FI 20050392
(43) Date of publication of application: 26.12.2007
(73) Proprietor: M-Real Oyj, 02100 Espoo (FI)
(72) Inventor: PARTANEN, Juho, Aleksi, FI-02940 Espoo (FI); RUUTU, Kirsti, FI-06100 Porvoo (FI); MUSTONEN, Tuomas, FI-40100 Jyväskylä (FI)
(74) Representative: Sundman, Patrik Christoffer
(86) International application number: PCT/FI2006/000121
(87) International publication number: WO 2006/108913

(56) References cited:
- EP-A- 1 065 623
- EP-A1- 0 504 446
- WO-A1-2005/122068
- US-A- 4 181 251
- US-A- 4 350 883
- US-A- 5 430 278
- US-B1- 6 168 080
- US-B1- 6 202 929

## Description

The present invention relates to recording of information in an electromagnetically readable form. More specifically, the invention relates to an electromagnetically readable marking, which includes electrically conductive areas on a substrate. In addition, the invention relates to a method for manufacturing such a marking, and a memory medium, which is implemented with the aid of such a marking.

Previously, information has been recorded on packages with the aid of optically detectable markings, such as bar codes, or of electromagnetically readable circuits, such as Radio Frequency Identification (RFID) circuits. A drawback in visual marking is the area it takes up on the surface of a package, which correspondingly reduces the surface area available for branding and marketing. On the other hand, visual marking is cheap and easy to use. Conventional UPC (Universal Product Code) and EAN (European Article Numbering) bar codes have typically contained individuation information on the manufacturer of the product and on the type of product, in the form of a number series coded in a 1-D form. In addition, bar codes include a check number, which can be used determine whether the reading of the code has succeeded. If it is wished to use a bar-code as a basis for determining, for example, the name of the manufacturer, it will be necessary to know the UPC or EAN identification number issued to the manufacturer. In addition to this, visual markings can be easily falsified.

The advantage of RFID circuits is their large storage capacity, which permits the explicit recording of, for example, manufacture data. RFID circuits can also be read over a relatively great distance. However, a drawback with RFID circuits is their relative high cost, which at the present price level places most consumer packages, such a confectionary and cigarette boxes, hopelessly outside their area of application. At present, the technology suits, for example, the marking of pallets or large transport boxes, and not of individual consumer packages. In addition, the materials used in the circuits may be unsuitable for recycling.

A detectable marking can also be produced, for example, by using a conductive material on paper. US patent publications 6 168 080 and 6 202 929 disclose a method, in which a conductive printing ink is used to print on paper a bar-code pattern, which is read by moving it in an electric field produced by a single electric electrode and by detecting the capacitive changes caused by the bar code, using at least one other electrode. Though the method has the advantage of low production costs of the marking, the information storage capacity is at most in the same order of magnitude as that in optically readable bar codes, as the electrical connection between the marking and the various components of the reading device and the creation of a sufficient level of conductivity with the aid of printing ink set a lower limit to the physical size of the marking.

EP publication 504 446 discloses a method for producing an electromagnetically readable bar-code type marking, for example, on metal surfaces. In it, the electrical properties of the surface are altered at specific locations, whereas other specific locations remain unprocessed. The pattern created has a small storage capacity.

Further, US publication 4181 251 discloses a card suitable, for example, for security applications, which comprises a chemically homogenous layer arranged between the surface layer of the card, and the conductivity of which can be altered in specific areas, for example, with the aid of thermo-compression, in order to produce a binary bar-code type marking. US publication 5430278 too discloses a method for producing a binary electromagnetically readable bar code.

US publication 4 350 883 discloses a method for producing products of a type that includes parallel conductive metal wires embedded in the inner layer of the product. Such a marking is expensive and difficult to produce. It is not suitable for mass production, such as the marking of consumer packages, as the wires must be embedded in the product already in its manufacturing stage.

WO publication 05/0 275 99 discloses a method for manufacturing electrical components on a paper base. In the method in question, a paper web is run through relief printing rolls, thus forming recesses and ridges in the paper. After this, a conductive material is applied to the entire surface of the paper. In the last stage, the conductive material is milled off the area of the ridges, thus forming a conductor pattern defined by the shape of the recesses. The method can be used in applications, in which there is no variation in the electrical conductivity of the different parts of the conductor pattern produced. In addition, it requires the shape of the conductor pattern to be known already in the manufacturing stage of the paper.

EP 1065623, which discloses the features of the preamble of claim 1, discloses a microwave readable barcode comprising conductive bars of different lengths, angles or positions.

The invention is intended to create a new type of marking, which has an increased storage capacity relative to the surface area it requires, as well as a method for producing such a marking.

The basic idea of the invention is to arrange an detection zone, i.e. a marking, on a substrate, which marking comprises first areas (also known as 'conductive areas') formed from at least one electrically conductive material, which are arranged at a distance to each other and the electrical conductivity of which is greater than a predefined threshold value, as well as second areas (also known as 'intermediate areas'), the electrical conductivity of which is less than, or equal to the said threshold value. The first areas comprise several different conductivity levels, so that the detection zone will include at least two first areas, the electrical conductivities of which differ substantially from each other. The marking can be read with the aid of an electromagnetic connection from the substrate.

Zero conductivity can be used as the threshold value, but, depending on the embodiment, the threshold value can always also be some value differing from zero. The various levels of electrical conductivity can be created, for example, through the selections of the electrically conductive materials, by altering the dimensions or patterning of the first areas, or, for example, by chemically altering the properties of the electrically conductive material applied to the substrate, after their application. The electrical conductivity levels of the first areas can also be created by patterning the area, for example by screening, so that only part of the surface area of the first area is coated with an electrically conductive substance. The electrically conductive material can be, for example, a polymer. According to one embodiment, the intermediate areas can also include some electrically conductive material, which has an electrical conductivity that is, however, substantially lower than that of the conductive areas. The intermediate areas can, of course, also be left as 'bare' areas.

In this case, the term electrical conductivity of an area refers to the totality, determined by the material and geometrical properties of the area, which affects the signal that can be measured by connecting to the area electromagnetically. The term electromagnetic connection refers to capacitive, inductive, and galvanic forms of connection. In an ideal case, the electrical conductivity can be determined by knowing the conductance and susceptance (i.e. admittance) of the material used, and the shape of the area. The electrical conductivity is thus strongly bound to the frequency and detection method used. In practice, the quantities being measured are unavoidably also affected by, for example, the materials surrounding the area, for example, the electrical properties of the substrate, as well as the other conductive areas in the vicinity.

A relatively cheap material, such as paper or board, can be used as the substrate.

More specifically, the marking according to the invention is characterized by what is stated in the characterizing portion of Claim 1.

The method according to the invention is, in turn, characterized by what is stated in the characterizing portion of Claim 15.

Many advantages are gained with the aid of the invention. With the aid of the invention, different levels of electrical conductivity can be exploited as one dimension of the coding of information, which will significantly increase the amount of information per unit of surface area. Thus, according to the number of different conductivity levels, many times the amount of information can be stored in the marking, compared to 'one-dimensional' markings. The marking can be invisible to the naked eye and/or it can be located somewhere in an inner layer or between the layers of the substrate, which will make the marking more difficult to falsify, while releasing more of the surface area of the substrate, for example, for printing.

In optically readable markings, such as bar codes, a corresponding advance would be to exploit grey tones or colours in the coding, instead of the pattern consisting of only white and black areas.

The invention can be applied in many sectors of industry, in which electronically or optically detectable information is stored in a materials, for example, in a package, document, building board, textile, or surfacing. Such industrial sectors include the foodstuffs, pharmaceuticals, convenience-goods, and construction industries, as well as logistics, surveillance, and laboratory services. Thus the invention can be used, for example, to manage goods consignments handled in postal services, freight transport, aviation, pharmacies, and hospitals.

The invention also permits the manufacture of a new and secure type of authenticity verification. The verification can be applied to the surface of the product or between the layers of the product, in a form that is either visible or invisible to the naked eye. In addition, markings that can be read only with a specific type of reading device can be designed, thus making it difficult for unauthorized persons to access the information content of the marking. This will make it possible to design, for example, customer-specific verification systems. In addition, a conductive marking that is permanently applied to a product or its package is extremely difficult to falsify without being noticed. The information contained in the marking can also be in an encrypted form.

We have observed that a sufficient detectability and electrical contrast in such a marking can be achieved without metallic conductivity in the marking. The conductivity of the conductive areas of a typical marking is in the order of 10⁻¹⁰- 10 S/cm, which is several orders of magnitude lower than the conductivity of metals.

The method according to the invention can be applied on an industrial scale. A conductive material, or several conductive materials can be applied to a paper or board product, for example, using offset, gravure, and flexo printing methods, in order to form conductive areas (the so-called direct method). Alternatively, a conductive material can be arranged as a homogenous layer on a paper or board substrate in the coating, sizing, or lacquering stage, either as its own layer, or mixed into the coating paste, size, or lacquer. In this case, the differences in conductivity between the conductive areas and the intermediate areas are produced afterwards, for example, by chemical or mechanical processing. Chemical processing can take place, for example, by applying some suitable chemical, which alters the electrical conductivity of the material (de-doping/doping), on top of a layer containing the conductive material, or correspondingly on top of a layer containing an electrically non-conductive material (the so-called indirect method). The electrical conductivity of an area that has once been de-doped or doped can also be altered afterwards by de-doping, doping, or in some other way. Electrical conductivity can thus be altered in several process stages, in the direction of both a higher and a lower conductivity. This embodiment can be exploited, for example, when altering the marking in the various stages of the product's supply chain. In this document, the term de-doping refers to reducing the electrical conductivity of an area by introducing some other substance to the area. Correspondingly, the term doping refers to increasing the electrical conductivity of an area by introducing some other substance to the area.

In addition to the aforementioned methods, it is also possible to use a combination of different methods, in which, for example, a conductive pattern is first applied to a paper or board product using an offset, gravure, or flexo printing method, while in the next stage the conductivity levels of the conductive areas are chemically altered, in other words information is written on them. The first stage is typically performed in the manufacturing stage of the package, but the latter stage can be performed either in connection with the manufacture of the package, or, for example, only in the packing stage of the product.

The method according to the invention can also be applied on a small scale even in home conditions. In this case, the conductive materials, which could be, for example, different polymers or the same polymer, the composition of which is varied to alter the electrical conductivity, are put on paper using an inkjet printer (the direct method). Alternatively, a de-doping/doping compound/s can be arranged on top of a polymer layer applied beforehand, using the inkjet method, in order to produce a marking according to the invention (the indirect method). Inkjet printing can naturally also be used on an industrial scale.

The invention can be used for recording product data in the same way as traditional bar codes. In this case, however, considerably more information can be recorded, such as the product's manufacturer, its manufacturing location, its time of manufacture, or other data on its origin. As the information capacity increases, these data can even be recorded explicitly (i.e. without code numbers or code words), for example, with the aid of the ASCII system, thus making the marking considerably more flexible than traditional bar codes based on optical or electrical markings. In addition, the marking can also include, for example, the number data contained in traditional UPC and EAN bar codes, thus making the interpretation of the marking, in the case of these data, compatible with the prevailing system in general use.

The large information capacity combined with digital printing, for example the inkjet method, also permits packages to be identified at an individual level. The invention can thus be used to record information according to the data-storage standard of traditional RFID tags. According to the standard defined by the EPC Global Inc. organization, the amount of information contained in an RFID tag totals 96 bits, which is divided into a header portion, which defines the structure of the information contained in the tag, a product manufacturer's portion, a product-type information portion, and a product-individuation information portion. The said 96-bit amount of information is sufficient to individuate every product in the world.

The marking according to the invention can also tailored to suit particular purposes, for example, for use inside companies, or as part of their customer operations, in which cases the information content of the marking will be determined by the requirements of the company in question. The information can also be stored in the marking in very many different formats. Examples of these are seven or eight-bit ASCII strings, which can be easily converted to text or number series. Alternatively, the information can be contained in the marking in an encrypted form, so that the production and interpretation of the marking will require encryption and decryption means. One example of this are authenticity verification applications.

According to one embodiment, the marking is located on the surface of the product. A marking on the surface is easy to manufacture but, on the other hand, it is subject to wear, such as knocks and scratches, which can reduce the readability of the marking over time. However, the marking can also be located, for example, on an inner surface of the package, where it will also be protected from wear.

According to a second embodiment, the marking is located in an inner layer of the product. The marking can be put in an inner layer, for example, in the manufacturing stage of a paper or board product, such as a package, in which case a size, coating, printing ink, or lacquer layer, which will protect the marking, can be spread on top of it.

According to a third embodiment, the marking is located in a glued seam of a package. In that case, the marking can be formed in a space reserved for the gluing of the package blank, when the package has still not been folded, or has only been partly folded. The marking can then remain under the adhesive, between the board layers. This embodiment has the advantage that the seam points are durable, so that the marking will be well protected from impact and wear. In addition, glued seams do not crease easily. It is also natural to add the application of the marking to the seaming stage of the packaging process, thus eliminating the creation of entire new stages that would slow the packaging process.

According to a fourth embodiment, the marking disclosed in the invention is made to change according to ambient conditions. In this case, the method can be applied, for example, in packages that sense the state of the environment and changes taking place in it (so-called smart packages), in packages that participate in the control of the manufacturing or other process, or in building materials that monitor the condition and state of a structure.

The marking according to the invention can also be used in normal sheets of paper. For example, an optically readable bar code or alignment markings are often placed in the edges of many official forms, documents, questionnaires, and invoices. These markings often make the forms look untidy and in many cases, however, are of no benefit to the person filling the form in question. They are utilized only, for example, in automated reading of the form, or in archiving. With the aid of the present invention, such markings can be made invisible to the naked eye, thus considerably improving the appearance of forms, which will not look so complicated. For example, this will help to relieve the 'form phobia' of those with business in government offices. With the aid of the invention it is also possible to create forms, to which unnoticeable markings can be added afterwards.

The method disclosed in the invention can be easily applied, for example, to existing processes in the packaging and paper industries, making it very cheap to implement. The method does not require microcircuits to be placed in a package in order to work, even though in some applications these can be utilized as part of the marking.

The conductivity of the first areas of the detection zone differs substantially from each others, as they can be identified (distinguished from each other and from the second areas) using electromagnetic means by detection from outside the substrate. In that case, the difference in the conductivity of two consecutive conductivity levels in the conductivity order can be, for example, 20 - 100 % of the difference between the conductivity of the highest level and that of the threshold level. It will then be possible to use 2 - 6 different conductivity levels. This can be applied in typical markings with a reasonably small information content, in which 4 - 6 conductivity levels, for example, are used. Such markings can be read reliably and rapidly and are thus suitable for use, for example, in convenience-goods stores or supply centres. According to a second preferred embodiment, the difference in the conductivity of two consecutive conductivity levels in the conductivity order can be, for example, 5 - 100 % of the difference between the conductivity of the highest level and that of the threshold level. It will then be possible to create markings, in which there are, for example, 7 - 22 conductivity levels. Such marking can already contain a reasonably large amount of information, but their production and reliable reading is technically more demanding. If there are many conductivity levels in a marking (for example, four or more), the doping/de-doping method, for example, described in greater detail later in this document will be particularly well suited to their production.

According to one embodiment, the conductivity of one (higher) conductivity level in the conductivity order is 20 - 100 % greater than the difference in conductivity between the conductivity level in question and the preceding (lower) conductivity level in the conductivity order. This will achieve a conductivity-level scale that will become denser as it rises, thus allowing the entire available conductivity range to be used effectively.

The other characteristics and advantages of the invention will become apparent from the following detailed examination, which refers to the accompanying drawings, in which
Figure 1 shows a planar view of one possible marking according to the invention, in which there are four different conductivity-level areas on a non-conductive background,
Figure 2 shows a planar view of one possible marking according to the invention, in which there are four different conductivity-level areas and a synchronization pattern on a non-conductive background,
Figure 3 shows a planar view of one possible marking according to the invention, in which there are four different conductivity-level areas on a slightly conductive background,
Figure 4 shows a planar view of one possible multichannel marking according to the invention, in which there are four different conductivity-level areas on a non-conductive background,
Figure 5 shows a planar view of one possible multichannel marking according to the invention, in which there are four different conductivity-level areas implemented by geometrical patterning, on a non-conductive background,
Figure 6 shows a planar view of one possible board product according to the invention, which comprises a package blank, a glued seam of which is applied with an detection zone of several conductivity levels,
Figure 7 shows a perspective view of one possible reading-station arrangement with excitation and response electrodes,
Figure 8 shows a perspective view of one possible reading-station arrangement with excitation and response electrodes,
Figure 9 shows a schematic illustration of the electronic arrangement of the reading station,
Figure 10 shows a diagram, in the time-amplitude plane, of the response provided by a marking containing a synchronization pattern, by channel, and
Figure 11 shows a diagram, in the time-amplitude plane, of the response provided by a marking comprising four first-area conductivity levels of different sizes.

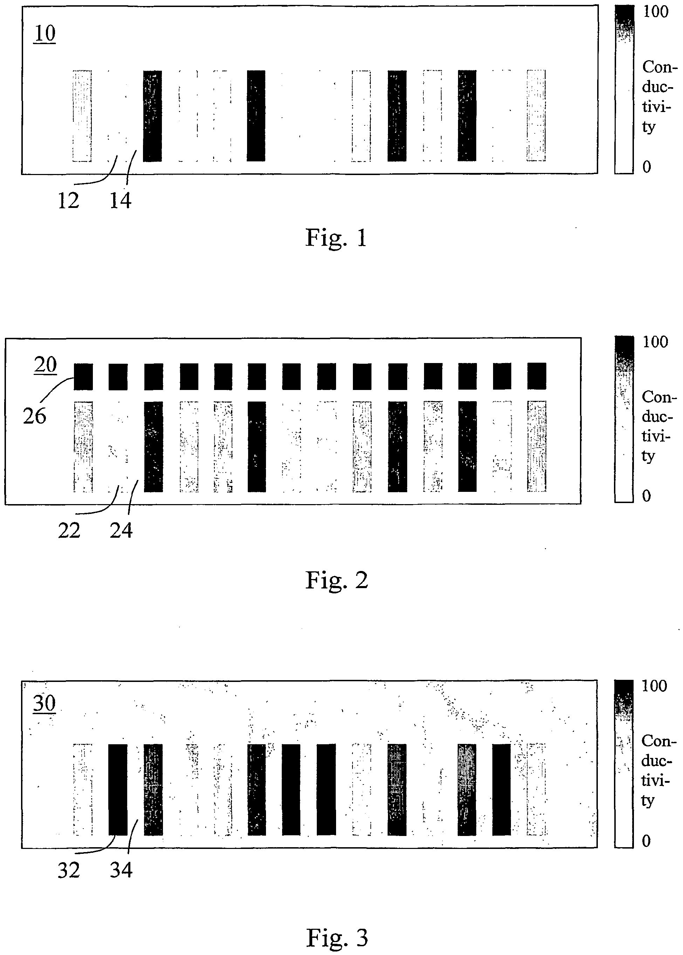

The marking, i.e. detection zone, according to Figures 1 - 5 comprises consecutive highly conductive first areas 12, 22, 32, 42, 52 (hereinafter also 'conductive areas') parallel to the surface of the substrate, and between them non or weakly conductive second areas 14, 24, 34, 44, 54 (hereinafter also 'intermediate areas'). Several discrete values can be obtained for the conductivity of the conductive areas, of which values there can be, for example, 2 - 500, particularly 2 - 128, typically 2- 32. The conductivity of the intermediate areas is substantially lower than the conductivity of the conductive area with the lowest conductivity.

A precondition for the reliable reading of the marking is a sufficient 'electrical contrast' between the conductive areas, i.e. that it should be possible to distinguish the areas from each other. Thus the distance between the first areas is preferably selected in such a way that the electrical conductivity of two consecutive areas in the detection order can be determined essentially independently of each other. In addition to the conductivity difference between the conductivity levels, the electrical contrast is also affected by the excitation frequency, the distance between the electrodes of the reading device and the marking, and the properties of the medium or media, the electrical properties of the substrate, and the reading speed. Because the method disclosed here can be applied to very different objects, to marking of different sizes and with different information contents, and to different reading devices, a suitable number of conductivity levels must be defined for each application, in such a way that both a sufficient amount of information and a sufficient electrical contrast are achieved. The absolute values given later are thus by way of example.

The concept 'electromagnetically readable marking' refers to a marking, the first areas of which can be detected with the aid of a capacitive, inductive, or galvanic cooupling from the substrate. Capacitive reading can be implemented using several electrodes, at least one of which couples an excitation signal to the marking by means of an electrical field, and at least one other of which picks up the coupled signal. Inductive reading can be implemented, for example, with the aid of several coils, one of which couples a magnetic field to the marking and at least one other of which picks up the coupled signal. In practical applications, both inductive and capacitive coupling take place unavoidably simultaneously, even though only one is generally intended to dominate. Thus, the non-dominant signal may create an interference factor, the presence of which it is advantageous to take into account in the design of the marking and the reading devices. Particularly at low conductivity levels, when the coupling is weaker, it is good to identify sources of interference and noise signals. Of course, it is also possible to speak of, for example, capacitively or inductively readable marking, but then it must be understood that the collected signal is also affect by a second, correspondingly inductive or capacitive coupling.

The frequency of the excitation signal used in the detection of the marking can be selected, for example, from the frequency range 1 kHz - 1GHz. It is also possible to use reading devices that utilize several different frequencies or frequency bands. The frequency and the material used in the marking, which is permanently bound to it, are best selected in such a' way that the electrical contrast between the different areas of the marking is maximized, in order to reduce erroneous identifications.

In the following examination, which is by way of an example, a relative scale of 0 ... 100 is used for the conductivity, in which 0 refers to a non-conductive or weakly conductive area and 100 to a highly conductive area. The examination is intended to illustrate the various alternatives and possibilities for implementing the marking.

According to one embodiment, which here is termed a linear, or equal-interval discrete marking, the electrical conductivities of the first areas are usually distributed on a scale from a specific threshold value to a defined maximum conductivity. In that case, the conductive areas can be given conductivity values from the scale, which includes zero and is at equal intervals above a specific conductivity value (threshold value). Such a marking comprises, for example, the permitted values 0, 30, 35, 40..., 90, 95, and 100 (16 values). Thus, one bar of the marking contains 4 bits of information (compare, for example, to an optical bar code, in which one line contains one bit of information). Thus, when reading the marking, the measured response A/D is converted and interpreted, for example, by rounding to the nearest permitted value, in such a way that all values less than 27,5 are interpreted as 0 while correspondingly, for example, the value 68 is interpreted as 70, or correspondingly by rounding up, in such a way that values less than 25 are interpreted as 0, while, for example, the value 66 is interpreted as 70.

According to one embodiment, which here is termed a non-linear or increasingly dense discrete marking, the electrical conductivities of the first areas becoming increasingly densely distributed on the scale towards a greater electrical conductivity, from a specific threshold value to maximum conductivity. The conductive areas can thus be given values from a scale, which contains zero and becomes increasingly dense upwards above a specific conductivity value (threshold value). Such a marking can be given values, for example, from the scale 0, 30, 50, 65, 76, 82, ..., 97, 99, and 100. Such a non-linear marking has the advantage that the capacity of the reading device can be better utilized. It has been observed in experiments that the sensitivity of the reading increases in proportion to the conductivity of the area being read. In other words, at low conductivities the signal-noise ratio (SNR) of the measurement is poorer than at high conductivities. Thus, for the reliable identification of a single low conductivity level, the adjacent conductivity levels must be distant, whereas at high conductivity levels the intervals between the levels can be closer. Thus more information can be put into such a marking that becomes increasingly dense upwards that in an equal-interval marking, always according to the reading device and the conductivity range used.

In some embodiments, the aforementioned discrete marking can also be combined, in order to create other kinds of conductivity-level scales.

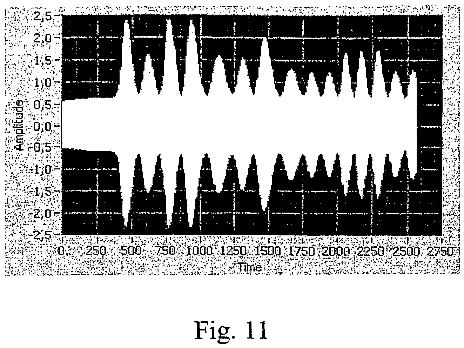

Figure 1 shows a simple single-channel marking 10, which comprises first (conductive) areas 12 of four different conductive levels. In the solution according to the figure, the conductive areas 12 and the second areas (intermediate areas) 14 are situated at equal intervals parallel to the surface of the substrate. The mutual distances between the areas and their sizes can, of course, be selected differently. An example of the response given by a marking of this type is shown in Figure 11.

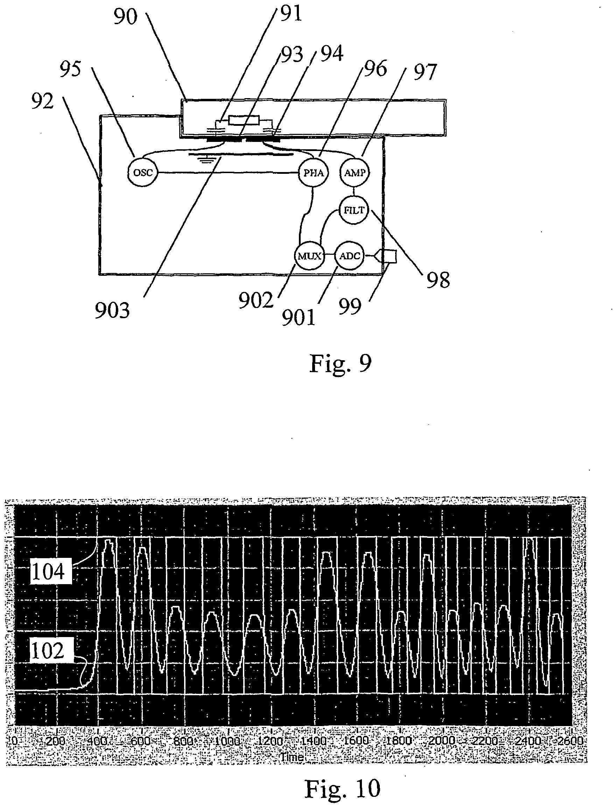

Figure 2 illustrates a marking 20, which comprises not only the elements shown in Figure 1, but also conductive synchronization areas 26, which are separated by intermediate areas from each other and from the conductive areas of Figure 1. The synchronization areas 26 can be considered to be a sub-group of the first (conductive areas). Their mutual electrical conductivity is, however, preferably constant. The synchronization areas are located in the direction of reading of the marking, for example, next to each conductive area, in such a way that they form a new 'channel' in the marking. The signal provided by the synchronization channel can, when reading the marking, be used to eliminate the problems created by variation in the reading speed, when interpreting the marking. Figure 10 shows the response provided by this type of marking, separately from both channels. The synchronization signal is marked with the reference number 104 and the data signal with the reference number 102. It can be seen from the figure that, when reading the marking, the reading speed has risen towards the end of the marking, but that it has been possible to eliminate the effect of this with the aid of the synchronization signal.

Figure 3 shows a marking 30, in which in addition to the actual conductive areas, the intermediate areas 34 are also weakly conductive. Such a marking is preferable in certain applications and in connection with certain marking production methods. These methods are described later in greater detail.

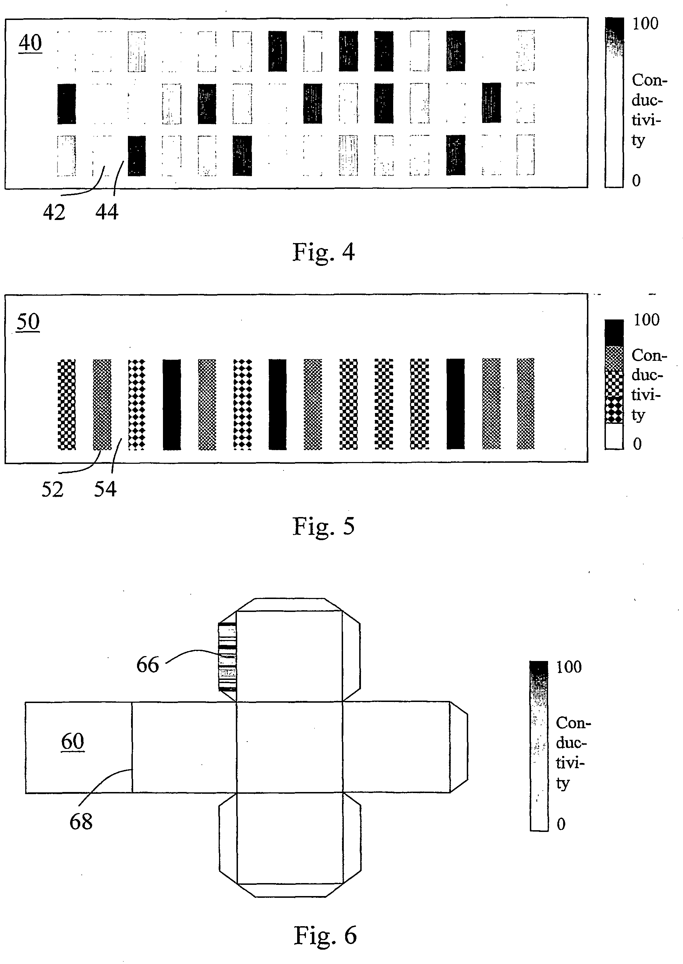

Figure 4 shows a three-channel marking 40. Such a marking comprises several rows of conductive areas 42 in the reading direction and intermediate areas 44. The areas between the rows are thus interpreted as intermediate areas. An amount of information many times greater than that in a single-channel marking can be contained in such a marking, depending on the manner of coding the information. Each channel can be interpreted independently, in which case the information content of the marking according to Figure 4 will be tripled compared to a single-channel marking, or, for example, each column shown in Figure 4 can be interpreted as one, in which case the number of bits contained in the marking will be tripled. Thus a small increase in the surface area of the marking makes it possible to achieve a large increase in information.

Markings with a varying conductivity/resistivity level can be produced on a substrate by many different methods. According to one embodiment, different materials or compounds, which have the desired conductivity values, can be applied to different parts of the marking. It is also possible to use a single substance, the composition of which has been altered chemically prior to application, in order to achieve the desired conductivity levels. For example, the composition of polyaniline can be changed in a controlled manner, in such a way that several conductivity levels, which deviate substantially from each other, can be created with the aid of the polyaniline. It is also possible to use several materials with an altered conductivity, so that it is possible to cover a large conductivity range and to further increase the information capacity of the marking.

According to another embodiment, some conductive polymer, hereinafter 'conductor polymer', can be used, such as polyaniline, polythiophene, polyacetylene, or polypyrrol, the conductivity of which can be controlled, for example, by varying the composition of the polymer, or by de-doping the polymer in a solution form, or only after the application of the polymer. The conductivity values produced by the de-doping can, in turn, be controlled, for example, by concentrating the de-doping compound and/or by the amount of it used, which are strongly bound to the polymer used or the polymer mixture and the thickness of the polymer layer. Either only the desired area of the surface of the substrate or the entire surface of the substrate can be coated entirely with the polymer, for example, in the manufacturing stage of the substrate. If the substrate is paper or board, this can take place at the paper mill using some known on-line or off-line application method, for example, in the coating or sizing stage. Paper or board can also be coated in a separate process, for example, in one of the following finishing stages, such as the printing or lacquering stage. One or more de-doping compounds can be applied, for example, printed on the desired locations on top of a layer containing a conductor polymer, by the customer, for example, the packer of a product. By altering the type, amount, and/or concentration of de-doping compound, the conductivity of each area can be either increased or weakened, in such a way that the desired type of marking comprising several conductivity levels is formed.

The above is a description of the de-doping of a conductive material layer, in order to reduce the electrical conductivity of the layer in question. In an alternative solution, a conductor polymer, in an electrically non-conductive or weakly conductive form, is put on the surface of the substrate, when it is brought to a form that conducts electricity better using a suitable doping agent, such as an acid. Such acids include organic sulphonic acid and inorganic mineral acids.

The marking according to this embodiment is thus produced in such a way that a substrate, which has two surfaces, is taken and an electrically conductive polymer is applied to one surface of the substrate, at least at the locations of the first areas. After this, the first areas are applied with at least one chemical to alter the electrical conductivity of the electrically conductive polymer, in such a way that the electrical conductivity of the first areas is greater than a defined threshold value and that they include at least two areas, the electrical conductivities of which differ substantially from each other. The conductive polymer can also be applied at the locations of the second areas, while the conductivity of these areas can also be altered using a chemical. In this case, the term conductive polymer refers to a polymer that, with the aid of doping or de-doping, can be made conductive. Thus it need not necessarily be in a highly conductive form in the application stage.

According to a third embodiment, the conductivity level is changed using a patterning method, which includes coating, lacquering, being output in a printer, and various printing methods, such as offset, gravure, and flexo. Inkjet printing and similar drop-application methods in particular are easily utilized, as the amount/thickness of the printing substance can be easily controlled with the aid of the printing points, in a similar way as different grey tones are produced in traditional printing. It is then possible to use, for example, an electrically conductive polymer or metallized printing inks, coatings, or lacquers, as the conductive substance.

According to a fourth embodiment, the conductivity level of a conductive area is defined according to the thickness of the substance layer. Thus a thick layer will naturally have lower resistivity than a thin one, if the other dimensions of the layers are of equal magnitude.

According to a fifth embodiment, printing inks and lacquers containing carbon black, the conductivity level of which is changed by changed the composition of the substance, are used for making the conductive areas. In practice, their conductivity levels are more difficult to control that those of polymers, for example.

The above embodiments can also be combined, for example, in such a way that several different polymers, which are de-doped or doped with several different compounds, are used. In the same marking, it is also possible to use a conductive polymer, the conductivity of which is altered and, in addition, to suitably pattern the application areas of the polymer.

In all of the aforementioned embodiments, the conductivity of the marking can also be influenced by geometric means, which in turn generally depend on the detection method of the marking. The conductive areas can be, for example, formed using screened patterns, or their shape, for example their width or thickness, can be altered. If the coupling taking place through an electric field (capacitive coupling) is used, for example, the strength of the signal being connected will be proportional to the surface area of the area being detected. If the surface are consists of, for example, small squares, the strength of the signal being connected can be influenced directly by the number of squares. Compared to means directly affecting the conductivity of the material, the utilization of geometrical means may, however, lead to a loss of the advantage relating to surface-area efficiency. An embodiment, in which the screening of the first areas is utilized, is shown in Figure 5. In the figure, the marking 50 comprises patterned first areas 52 and second areas 54 between them. Some of the first areas 52 may also be unpatterned.

According to one preferred embodiment, the external dimensions of the first area are mutually of equal magnitude parallel to, and/or at right angles to (in thickness) the surface of the substrate. This has the advantage that it is then impossible to create a marking, in which the same conductivity level can be created in two different ways. For example, a thick area implemented with a weakly conductive substance can give the reading device the same signal as a thin area implemented with a highly conductive substance, which is generally not desirable.

Conductive polymers, which are suitable for creating a marking, are, for example, polyaniline, polypyrrol, polyacetylene, and polythiophene. Suitable de-doping agents are often conventional chemicals, such as sodium hydroxide, which can be applied in a liquid form. Polyaniline in particular is an advantageous polymer, as its conductivity is highly dependent on its pH value. The polymer can be spread on the surface, for example, using some coating, sizing, lacquering, or printing method, either as part of the manufacture of the substrate or as a separate process. The de-doping agent can be applied, for example, by printing or stamping. The final result of de-doping can be influenced not only by the concentration of the de-doping agent in the chemical, but also by the manner of applying the chemical and by the patterning. De-doping can be performed, for example, by printing screen patterns, the size or interval of which vary, on the surface of the polymer. In terms of the reading event, unevenness in the order of a micromillimetre in the conductivity of the surface is of no importance, as the size of the smallest conductive area that can be reliably read is in the order of one millimetre. In reading, the level of the signal is thus determined by the macro-level conductivity of the area being detected.

De-doping can also be combined with some existing process stage, for example, with the stamping, cutting, scoring, printing, lacquering, gluing, or folding of the package blank when manufacturing packages. Another possibility is, for example, for part of the marking to be de-doped in each of these stages, in which case each manufacturing stage will leave its own 'mark' on the package. This procedure can also be used as the package proceeds along the logistics chain towards the consumer. For example, transport companies or importers can add markings to a package, in such a way that they may not necessary be visible to the consumer, like many existing package markings, manifests, etc. The markings would also not be easily falsified.

With reference to Figure 3, according to one embodiment a conductive polymer is used, which is applied as a unified area essentially on the entire surface of the substrate, or as a unified area on at least some part of it. The intermediate areas 34 (second areas) of the marking 30 are then formed by strong de-doping, thus radically reducing the conductivity of the intermediate areas. The conductive areas 32 (first areas) are de-doped less or not at all. Alternatively, the substrate is applied with a weakly conductive polymer and the first areas 32 are doped, in order to raise their conductivity to the desired levels. It will be obvious to one versed in the art that combinations of doping and de-doping can also be used to form the marking. The advantage of the embodiment described here is that the marking can be freely formed at any location at all of a substrate, in which there is the polymer in question.

With reference to Figures 1, 2, 3, and 4, according to one embodiment the conductive polymer is spread only at the location of the conductive areas 12, 22, 42, 52 (first areas). In this case a good electrical contrast will be achieved between the intermediate areas 14, 24, 44, 54 (second areas) and the conductive areas 12, 22, 42, 52 and a wider conductivity range will thus be available for storing information. In this embodiment, in order to perform de-doping it will, however, be necessary to know precisely where the polymer is. Detection can take place electrically or optically, by detecting either the polymer areas or suitable alignment marks, which are produced on the base, for example, during the application of the polymer. Detection can also be made on the basis of the shapes of the substrate, for example, a package blank.

Each conductive area preferably consists of layers with the greatest possible homogeneity in conductivity, in the normal direction of the surface (i.e. in the direction of the thickness of the conductive layer). In this way it will be possible to reduce the effect on the reading result of variations in the distance between the reading electrodes and the marking.

Each conductive area is further preferably sharp-featured at its edges, i.e. is precisely delimited. This will improve the signal collected by the reading device, by making it more clearly defined, as the specific value of the gradient of the signal obtained from points of change in the marking will increase.

According to one embodiment, the marking is formed on the surface of a substrate. For example, in the case of a package the surface in question can be either an outer or inner surface of the package. A marking in an inner surface will be well protected from wear, but its reading will be made more difficult, as the distance between the reading device's electrodes and the conductive areas will increase. This is of significance, particularly in the case of thick grades of board or paper. If the marking is located in an outer surface of the package, it can be read more reliably, but will be more susceptible to wear. The marking can also be located in a glued seam of the package, i.e. between layers of board. Figure 6 shows a package blank 60, which has a marking 66 in the area of the side seam. The marking is formed on the surface of the package blank 60, but remains between two or more layers, when the package is folded and glued. Thus it is very well protected from wear, but can nevertheless be read from the surface of the package.

According to one embodiment, the marking is formed on an inner layer of the substrate. The marking can be located, for example, in the surface of a fibre layer of the paper or board, beneath one or more surfacing layers, for example, a size, coating, and/or lacquer layer.

In the above description, simple markings according to Figures 1 - 5 are used as examples. However, one versed in the art will understand that, with the aid of the principles described above, it is possible to produce markings, in which the locations of the conductive and non-conductive areas differs considerably from these.

The following is a description, by way of example, of reading devices, by means of which a marking according to the invention can be read from a substrate. In the description, the example used is of device solutions based on a capacitive coupling through an electric field, but the same principles can easily be applied to inductive devices too.

In the reading unit, there are at least two electrode groups, in each of which there is at least one electrode. The excitation is led to the first electrode while the response is read from the second electrode. From the strength of the response, the change in phase, a frequency analysis, and/or other properties, it is possible to decide whether or not there is conductive material between the electrodes, and what the properties of the material are. For example, it is possible to decide, even purely on the basis of the amplitude response received in the time plane, the shape of the marking and from that the information stored in it. Thus the reading event reveals a bit or character string, in which information is coded. If a marking with several channels is used, the electrode groups can comprise separate excitation and response electrodes for each channel.

The reading event is based on either the physical or apparent location of the excitation and response electrodes relative to temporal change in the detection zone. This can be implemented, for example, in such a way that the excitation and response electrodes and the marking are arranged to move relative to each other. The physical movement can be eliminated by using a scanning construction, but the principle will remain the same. Thus a temporal change in the location of the excitation connecting electrodes and the response pick-up electrodes relative to the marking is arranged to take place electronically, in which case mutual physical movement of the reading station and the marking is not required. The direction of the two-dimensional movement is not necessarily important.

The reading speed and its non-linearity affect the response, but the effect can, however, be cancelled with the aid of signal processing or by using a synchronization pattern in the marking. If the synchronization pattern is added beside the marking being read, it can be read using a second channel and the data of these measurement channels can be combined later. In this way, the varying sizes or distances between the areas of the marking will not become a problem, even with long bit-strings.

Another way to take into account a varying reading speed is to add a standardized series of conductive areas to the marking, from which the distance between the bits can be determined. On the basis of the series, a threshold value is also determined, which is used in the interpretation of the response given by the other areas. Even though this version cannot eliminate the effect on the response of a non-linear reading speed, it is, however, workable, particularly with short detection zones. The version also has the advantage that the second channel need not be reserved for reading the synchronization information.

With reference to Figure 9, the operation of the reading station can follow, for example, the following principle. An excitation signal is created using an oscillator 95, which is, for example, of the Wien-bridge type, the frequency of which can be, for example, 1 kHz - 1 GHz, preferably 1 kHz - 1 MHz. It is advantageous, but not essential for the amplitude of the excitation signal to be large, for example, 200 - 300 V, in order to create a considerable electric field in the vicinity of the electrodes 93 and 94. Thus a transformer can be added between the oscillator 95 and the electrodes. The transformer can be driven, for example, by an operation amplifier, in which case large currents will not be output and the high voltage will not create a danger to the user of the device. The excitation is connection between the electrodes 93 and 94 through an electric field, so that the marking area or areas in their vicinity can be considered a resistance 91. The signal connected through the capacitive resistance 91 is led to the detection electronics. Before the detection of the signal being connected, it may be necessary to amplify it in an amplifier 97 and filter it in a filter 98. In filtering and amplification, the phase of the signal may become non-linear, so that it will be necessary to also detect the phase directly from the measurement signal, using a phase detector 96. If the phase detector gives the phase information as an analog signal, one possible implementation can be a combination of a multiplexer 902 and an analog-digital converter 901, from which the response can then be directed in a digital form through a connector 99 for analysis by a computer.

The aforementioned phase detection can be implemented, for example, with the aid of a phase-locked loop. In the loop the phase difference between the two signals is compared, the result of the comparison is output typically either as an analog signal, in which case the phase difference tells the frequency or voltage of the signal, or as a digital signal, in which case the phase difference is obtained directly as a character string. In this method particularly the points of change of the phase difference provide information as to the point at which the time-dependent response is an interface between the different conductivity levels. This phase information combined with the amplitude response will facilitate the interpretation of the marking.

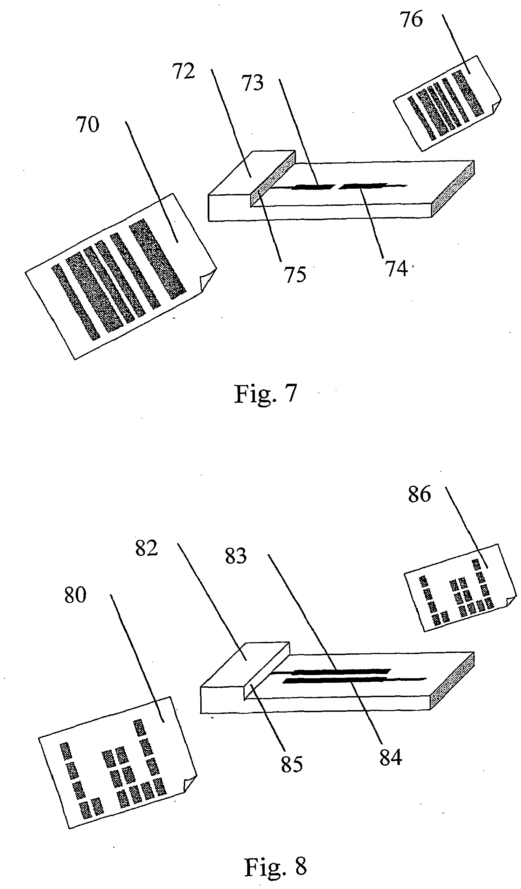

The excitation and response electrodes can be put on different sides of the substrate, or they can be located on the same side of the substrate, opposite to or next to each other, as is illustrated in Figures 7 and 8. It is then preferable for the electrodes 73, 74, 83, 84 to be as low as possible, for example, copper draws on top of the circuit-board material, so that the electrical field will not concentrate between the electrodes. The electrical can further be directed on top of the electrodes, by surrounding them from the sides and beneath with a substance with the smallest possible dielectric value, for example air, Teflon, or polystyrene.

In the reading device, a mechanical controller 75, 85 can be used to ensure the correct orientation of the marking relative to the electrodes. A controller will not necessarily be required, however, if the number of channels and logic are increased.

### Example

This example is intended to illustrate one of the above embodiments of the invention.

An electrically conductive marking is made on a substrate, which comprises coated folding boxboard. The grammage of the boxboard is 300 g/m². The fibre layer of the boxboard is formed of three separate layers, in which the grammage of the outside layer is about 30 g/m², that if the inner layer is 200 g/m², and that of the backing layer about 40 g/m². The boxboard is coated twice on the side of the smoother side and one on the rougher backing side, with a conventional coating paste, the composition of which is similar to the following: a total of 100 parts of one or more coating pigments, 10 - 15 parts of latex, and in addition small amounts of other additives. Typically used coating pigments are, for example, ground and flocculated calcium carbonate, kaolin, and gypsum. The surface of the boxboard that was used was the twice-coated surface, i.e. the upper side, the roughness of which was 1.0 µm, measured using the PPS-Flex method (method according to the standard ISO 8791-4).

In this example, the conductive polymer used was a 5-% water dispersion of polyaniline, into which 45-% ethyl-vinyl-acetate (EVA) was mixed, using a magnetic mixer, prior to spreading on the base material, in order to optimize the homogeneity of the layer thickness. In the mixed water dispersion used, there was 3 % of polyaniline and 12 % of EVA, the solids content thus totalling 15 %.

The water dispersion of polyaniline and EVA was spread on the boxboard used as a base material using a seam-spreading apparatus. The wet thickness of the layer was 28 µm. Thus by calculation the thickness of the spread and dried layer was about 4 µm. The surface resistance of the layer was measured to be in the order of 10⁵ Ω/□.

In order to create conductive patterns, the coated boxboard sheets were treated with a de-doping alkali agent; in this case a weak (0.2 M) solution of sodium hydroxide (NaOH). At this stage, the area of the conductive patterns was not yet treated with the de-doping agent, i.e. the pattern formed using NaOH was a negative of the desired conductive pattern. The pattern formed corresponds to the pattern shown in Figure 1, in which the height of a single bar was 30 mm and its width 3 mm. The interval between the bars was also 3 mm.

After this, the areas of the conductive patterns were treated, in order to create different conductivity levels, with an even weaker solution of NaOH. The concentrations used to create four different conductivity levels were 1) 0.07 M; 2) 0.05 M; and 3) 0.03 M, the fourth level being untreated.

The response created by a 30-V, 20-kKz excitation lead through the patterns by a capacitive coupling was in case 1) 1.6 Vₚ₋ₚ; in case 2) 2.2 Vₚ₋ₚ; in case 3) 2.5 Vₚ₋ₚ; and in case 4) 2.5 Vₚ₋ₚ. The equal magnitude of the resistances of the third and fourth conductivity levels was determined to be due mainly to excessively weak de-doping relative to the polymer composition and layer thickness used.

## Claims

1. A marking applied on and electromagnetically readable from a substrate, which marking comprises
- first areas (12, 22, 32, 42, 52) arranged on the substrate at a distance to each other, said first areas (12, 22, 32, 42, 52) contain a least one electrically conductive material and the electrical conductivity of said first areas is greater than a defined threshold value, and
- second areas (14, 24, 34, 44, 54) arranged between the first areas, the electrical conductivity of said second areas (14, 24, 34, 44, 54) is less than or equal to said threshold value,
**characterized in that**
- at least two of said first areas (12, 22, 32, 42, 52) differ substantially from each other in their electrical conductivity.

2. The marking according to Claim 1, **characterized in that** the substrate comprises a paper or board product.

3. The marking according to any of the preceding Claims, **characterized in that** the electrical conductivities of the first areas are distributed evenly on a scale from the said threshold value to a defined maximum conductivity.

4. The marking according to either Claim 1or 2, **characterized in that** as the electrical conductivities of the first areas increase the density of their distribution on a scale increases,
from the said threshold value to a defined maximum conductivity.

5. The marking according to any of the preceding Claims, **characterized in that** the electrical conductivities of the first areas are defined at least partly on the basis of the electrical properties of the materials they contain.

6. The marking according to any of the preceding Claims, **characterized in that** the first areas are formed from at least one conductive polymer, such as polyaniline, polypyrrol, polyacetylene, or polythiophene.

7. The marking according to Claim 6, **characterized in that** at least one chemical is arranged on the first areas, in order to alter their electrical conductivity.

8. The marking according to any of the preceding Claims, **characterized in that** the second areas are formed from a conductive polymer, such as polyaniline, polypyrrol, polyacetylene, or polythiophene, and that chemicals are arranged on them, in order to reduce their electrical conductivity to less than the said threshold value.

9. The marking according to any of the preceding Claims, **characterized in that** it comprises at least two first areas, the thicknesses of which differ from each other.

10. The marking according to any of the preceding Claims, **characterized in that** the electrical conductivity of the first areas is defined at least partly on the basis of their geometrical properties parallel to the surface of the substrate.

11. The marking according to any of the preceding Claims, **characterized in that** information is contained in the electrical conductivity and mutual positioning of the first areas.

12. Substrate comprising the marking of Claim 1, said substrate being a package or a package blank (60).

13. Substrate according to Claim 12, **characterized in that** a detection zone is located in a glued seam of the package or package blank (60).

14. Substrate according to either of the preceding Claims 12 or 13, **characterized in that** a detection zone is arranged between the said substrate and some second material layer, for example, a size, coating, printing-ink, or lacquer layer.

15. A method for producing an electromagnetically readable marking, the method comprising the steps of :
- providing a substrate having two surfaces, and
- providing at least one electrically conductive material on one of said surfaces in order to form first areas (12, 22, 32, 42, 52) and second areas (14, 24, 34, 44, 54) between said first areas, at least the first areas being formed from said electrically conductive material,
- the electrical conductivity of said first areas is greater than a defined threshold value, and
- the electrical conductivity of said second areas is less than or equal to said threshold value, and
**characterized in that**
- at least two of said first areas differ substantially from each other in their electrical conductivity.

16. The method according to Claim 15, **characterized in that** said electrically conductive material is an electrically conductive polymer, for example, polyaniline, polypyrrol, polyacetylene, or polythiophene.

17. The method according to Claim 15 or 16, **characterized in that** both the first areas and the second areas are form from an electrically conductive polymer and the method comprises, in addition, a stage, in which at least one chemical is applied to the first and second areas, in order to alter the electrical conductivity of the electrically conductive polymer.

18. The method according to Claim 15 or 16, **characterized in that** only the first areas are formed from an electrically conductive polymer and the method comprises, in addition, a stage, in which at least one chemical is applied to the first areas, in order to alter the electrical conductivity of the electrically conductive polymer.

19. The method according to Claim 17 or 18, **characterized in that** the said chemical is applied by printing or imprinting.

20. The method according to Claim 17 or 18, **characterized in that** paper or board is used as said substrate.

21. The method according to Claim 20, **characterized in that** the electrically conductive polymer is applied in the manufacturing stage of the paper or board.

22. The method according to Claim 20, **characterized in that** the electrically conductive polymer is applied to the substrate in a stage in which a package or package blank is manufactured from paper or board.

23. The method according to any of Claims 15 - 22, **characterized in that** it comprises a stage, in which at least one additional material layer is arranged on the substrate, in such a way that it covers at least the said first and second areas.

## Patentansprüche

1. Eine Markierung, die auf ein Substrat aufgebracht wird und aus diesem elektromagnetisch auslesbar ist, wobei die Markierung aufweist:
- erste Bereiche (12, 22, 32, 42, 52), die auf dem Substrat in einem Abstand voneinander angeordnet sind, wobei die ersten Bereiche (12, 22, 32, 42, 52) mindestens ein elektrisch leitfähiges Material aufweisen und die elektrische Leitfähigkeit der ersten Bereiche größer als ein definierter Schwellenwert ist, und
- zweite Bereiche (14, 24, 34, 44, 54), die zwischen den ersten Bereichen angeordnet sind, wobei die elektrische Leitfähigkeit der zweiten Bereiche (14, 24, 34, 44, 54) kleiner oder gleich dem Schwellenwert ist,
**dadurch gekennzeichnet, dass**
- mindestens zwei der ersten Bereiche (12, 22, 32, 42, 52) sich in ihrer elektrischen Leitfähigkeit im Wesentlichen voneinander unterscheiden.

2. Die Markierung gemäß Anspruch 1, **dadurch gekennzeichnet, dass** das Substrat ein Papier- oder Kartonprodukt aufweist.

3. Die Markierung gemäß irgendeinem der vorhergehenden Ansprüche, **dadurch gekennzeichnet, dass** die elektrischen Leitfähigkeiten der ersten Bereiche auf einer Skala von dem Schwellenwert bis zu einer definierten maximalen Leitfähigkeit gleichmäßig verteilt sind.

4. Die Markierung gemäß Anspruch 1 oder 2, **dadurch gekennzeichnet, dass** mit dem Ansteigen der elektrischen Leitfähigkeit der ersten Bereiche die Dichte ihrer Verteilung auf einer Skala von dem definierten Schwellenwert zu einer definierten maximalen Leitfähigkeit ansteigt.

5. Die Markierung gemäß irgendeinem der vorhergehenden Ansprüche, **dadurch gekennzeichnet, dass** die elektrischen Leitfähigkeiten der ersten Bereiche zumindest teilweise auf der Grundlage der elektrischen Eigenschaften der Materialien definiert sind, die sie enthalten.

6. Die Markierung gemäß irgendeinem der vorhergehenden Ansprüche, **dadurch gekennzeichnet, dass** die ersten Bereiche aus mindestens einem leitfähigen Polymer, wie zum Beispiel Polyanilin, Polypyrrol, Polyacetylen oder Polythiophen gebildet sind.

7. Die Markierung gemäß Anspruch 6, **dadurch gekennzeichnet, dass** mindestens eine Chemikalie auf den ersten Bereichen angeordnet ist, um ihre elektrische Leitfähigkeit zu ändern.

8. Die Markierung gemäß irgendeinem der vorhergehenden Ansprüche, **dadurch gekennzeichnet, dass** die zweiten Bereiche aus einem leitfähigen Polymer, wie zum Beispiel Polyanilin, Polypyrrol, Polyacetylen oder Polythiophen gebildet sind und dass Chemikalien auf ihnen angeordnet sind, um ihre elektrische Leitfähigkeit auf weniger als den Schwellenwert zu reduzieren.

9. Die Markierung gemäß irgendeinem der vorhergehenden Ansprüche, **dadurch gekennzeichnet, dass** sie mindestens zwei erste Bereiche aufweist, deren Dicken sich voneinander unterscheiden.

10. Die Markierung gemäß irgendeinem der vorhergehenden Ansprüche, **dadurch gekennzeichnet, dass** die elektrische Leitfähigkeit der ersten Bereiche zumindest teilweise auf der Grundlage ihrer geometrischen Eigenschaften parallel zu der Fläche des Substrats definiert ist.

11. Die Markierung gemäß irgendeinem der vorhergehenden Ansprüche, **dadurch gekennzeichnet, dass** in der elektrischen Leitfähigkeit und der gegenseitigen Positionierung der ersten Bereiche Informationen enthalten sind.

12. Substrat, das die Markierung gemäß Anspruch 1 aufweist, wobei das Substrat eine Verpackung oder ein Verpackungsrohling (60) ist.

13. Substrat gemäß Anspruch 12, **dadurch gekennzeichnet, dass** sich ein Detektionsbereich in einem geklebten Falz der Verpackung oder des Verpackungsrohlings (60) befindet.

14. Substrat gemäß einem der vorhergehenden Ansprüche 12 oder 13, **dadurch gekennzeichnet, dass** ein Detektionsbereich zwischen dem Substrat und irgendeiner zweiten Materialschicht, zum Beispiel einer Leim-, Beschichtungs-, Druckfarben- oder Lackschicht angeordnet ist.

15. Ein Verfahren zum Herstellen einer elektromagnetisch lesbaren Markierung, wobei das Verfahren die folgenden Schritte aufweist:
- Bereitstellen eines Substrats, das zwei Flächen aufweist, und
- Bereitstellen mindestens eines elektrisch leitfähigen Materials auf einer der Flächen, um erste Bereiche (12, 22, 32, 42, 52) und zweite Bereiche (14, 24, 34, 44, 54) zwischen den ersten Bereichen auszubilden, wobei zumindest die ersten Bereiche aus dem elektrisch leitfähigen Material gebildet sind,
- die elektrische Leitfähigkeit der ersten Bereiche größer als ein definierter Schwellenwert ist, und
- die elektrische Leitfähigkeit der zweiten Bereiche kleiner oder gleich dem Schwellenwert ist, und
**dadurch gekennzeichnet, dass**
- mindestens zwei der ersten Bereiche sich in ihrer elektrischen Leitfähigkeit im Wesentlichen voneinander unterscheiden.

16. Das Verfahren gemäß Anspruch 15, **dadurch gekennzeichnet, dass** das elektrisch leitfähige Material ein elektrisch leitfähiges Polymer, zum Beispiel Polyanilin, Polypyrrol, Polyacetylen oder Polythiophen ist.

17. Das Verfahren gemäß Anspruch 15 oder 16, **dadurch gekennzeichnet, dass** sowohl die ersten Bereiche als auch die zweiten Bereiche aus einem elektrisch leitfähigen Polymer gebildet sind und das Verfahren darüber hinaus einen Schritt aufweist, in dem mindestens eine Chemikalie auf die ersten und die zweiten Bereiche aufgebracht wird, um die elektrische Leitfähigkeit des elektrisch leitfähigen Polymers zu verändern.

18. Das Verfahren gemäß Anspruch 15 oder 16, **dadurch gekennzeichnet, dass** nur die ersten Bereiche aus einem elektrisch leitfähigen Polymer gebildet sind und das Verfahren darüber hinaus einen Schritt aufweist, in dem mindestens eine Chemikalie auf die ersten Bereiche aufgebracht wird, um die elektrische Leitfähigkeit des elektrisch leitfähigen Polymers zu verändern.

19. Das Verfahren gemäß Anspruch 17 oder 18, **dadurch gekennzeichnet, dass** die Chemikalie durch Drucken oder Prägen aufgebracht wird.

20. Das Verfahren gemäß Anspruch 17 oder 18, **dadurch gekennzeichnet, dass** Papier oder Karton als Substrat verwendet wird.

21. Das Verfahren gemäß Anspruch 20, **dadurch gekennzeichnet, dass** das elektrisch leitfähige Polymer in dem Herstellungsschritt des Papiers oder Kartons aufgebracht wird.

22. Das Verfahren gemäß Anspruch 20, **dadurch gekennzeichnet, dass** das elektrisch leitfähige Polymer in einem Schritt auf das Substrat aufgebracht wird, in dem eine Verpackung oder ein Verpackungsrohling aus Papier oder Karton hergestellt wird.

23. Das Verfahren gemäß irgendeinem der Ansprüche 15 bis 22, **dadurch gekennzeichnet, dass** es einen Schritt aufweist, in dem mindestens eine zusätzliche Materialschicht derart auf dem Substrat angeordnet wird, dass sie mindestens die ersten und die zweiten Bereiche bedeckt.

## Revendications

1. Marquage appliqué sur un substrat électromagnétiquement lisible, lequel marquage comprend
- des premières zones (12, 22, 32, 42, 52) agencées sur le substrat à une certaine distance les unes des autres, lesdites premières zones (12, 22, 32, 42, 52) contiennent au moins un matériau électriquement conducteur et la conductivité électrique desdites premières zones est supérieure à une valeur seuil définie, et
- des deuxièmes zones (14, 24, 34, 44, 54) agencées entre les premières zones, la conductivité électrique desdites deuxièmes zones (14, 24, 34, 44, 54) est inférieure ou égale à ladite valeur seuil, **caractérisé en ce que**
- au moins deux desdites premières zones (12, 22, 32, 42, 52) diffèrent sensiblement l'une de l'autre dans leur conductivité électrique.

2. Marquage selon la revendication 1, **caractérisé en ce que** le substrat comprend un produit en papier ou en carton.

3. Marquage selon l'une quelconque des revendications précédentes, **caractérisé en ce que** les conductivités électriques des premières zones sont distribuées de manière égale sur une échelle de ladite valeur seuil à une conductivité maximale définie.

4. Marquage selon la revendication 1 ou 2, **caractérisé en ce qu'**à mesure que les conductivités électriques des premières zones augmentent, la densité de leur distribution augmente sur une échelle, de ladite valeur seuil à une conductivité maximale définie.

5. Marquage selon l'une quelconque des revendications précédentes, **caractérisé en ce que** les conductivités électriques des premières zones sont définies au moins partiellement sur la base des propriétés électriques des matériaux qu'elles contiennent.

6. Marquage selon l'une quelconque des revendications précédentes, **caractérisé en ce que** les premières zones sont formées d'au moins un polymère conducteur, tel que la poly(aniline), le poly(pyrrole), le poly(acétylène) ou le poly(thiophène).

7. Marquage selon la revendication 6, **caractérisé en ce qu'**au moins un produit chimique est agencé sur les premières zones, afin de modifier leur conductivité électrique.

8. Marquage selon l'une quelconque des revendications précédentes, **caractérisé en ce que** les deuxièmes zones sont formées à partir d'un polymère conducteur, tel que la poly(aniline), le poly(pyrrole), le poly(acétylène) ou le poly(thiophène), et **en ce que** des produits chimiques sont agencés sur elles, afin de réduire leur conductivité électrique à moins de ladite valeur seuil.

9. Marquage selon l'une quelconque des revendications précédentes, **caractérisé en ce qu'**il comprend au moins deux premières zones d'épaisseurs différentes.

10. Marquage selon l'une quelconque des revendications précédentes, **caractérisé en ce que** la conductivité électrique des premières zones est définie au moins partiellement sur la base de leurs propriétés géométriques parallèles à la surface du substrat.

11. Marquage selon l'une quelconque des revendications précédentes, **caractérisé en ce que** des informations sont contenues dans la conductivité électrique et le positionnement mutuel des premières zones.

12. Substrat comprenant le marquage de la revendication 1, ledit substrat étant un emballage ou une découpe d'emballage (60).

13. Substrat selon la revendication 12, **caractérisé en ce qu'**une zone de détection est située dans un serti collé de l'emballage ou de la découpe d'emballage (60).

14. Substrat selon l'une quelconque des revendications 12 et 13, **caractérisé en ce qu'**une zone de détection est agencée entre ledit substrat et une couche d'un deuxième matériau, par exemple, un apprêt, un revêtement, une encre d'impression, ou une couche de laque.

15. Procédé de production d'un marquage électromagnétiquement lisible, le procédé comprenant les étapes consistant à :
- fournir un substrat ayant deux surfaces, et
- fournir au moins un matériau électriquement conducteur sur une desdites surfaces afin de former des premières zones (12, 22, 32, 42, 52) et des deuxièmes zones (14, 24, 34, 44, 54) entre lesdites premières zones, au moins les premières zones étant formées à partir dudit matériau électriquement conducteur,
- la conductivité électrique desdites premières zones est supérieure à une valeur seuil définie, et
- la conductivité électrique desdites deuxièmes zones est inférieure ou égale à ladite valeur seuil, et **caractérisé en ce que**
- au moins deux desdites premières zones sont sensiblement différentes l'une de l'autre dans leur conductivité électrique.

16. Procédé selon la revendication 15, **caractérisé en ce que** ledit matériau électriquement conducteur est un polymère électriquement conducteur, par exemple, la poly(aniline), le poly(pyrrole), le poly(acétylène) ou le poly(thiophène).

17. Procédé selon la revendication 15 ou 16, **caractérisé en ce qu'**à la fois les premières et deuxièmes zones sont formées d'un polymère électriquement conducteur et le procédé comprend, en outre, un stade, dans lequel au moins un produit chimique est appliqué aux premières et deuxièmes zones, afin de modifier la conductivité électrique du polymère électriquement conducteur.

18. Procédé selon la revendication 15 ou 16, **caractérisé en ce que** seules les premières zones sont formées d'un polymère électriquement conducteur et le procédé comprend, en outre, un stade, dans lequel au moins un produit chimique est appliqué aux premières et deuxièmes zones, afin de modifier la conductivité électrique du polymère électriquement conducteur.

19. Procédé selon la revendication 17 ou 18, **caractérisé en ce que** ledit produit chimique est appliqué par impression ou surimpression.

20. Procédé selon la revendication 17 ou 18, **caractérisé en ce que** du papier ou du carton est utilisé comme ledit substrat.

21. Procédé selon la revendication 20, **caractérisé en ce que** le polymère électriquement conducteur est appliqué au stade de fabrication du papier ou carton.

22. Procédé selon la revendication 20, **caractérisé en ce que** le polymère électriquement conducteur est appliqué au substrat à un stade où un emballage ou une découpe d'emballage est fabriqué(e) à partir de papier ou de carton.

23. Procédé selon l'une quelconque des revendications 15 à 22, **caractérisé en ce qu'**il comprend un stade, où au moins une couche de matériau additionnelle est agencée sur le substrat, de telle sorte qu'elle couvre au moins lesdites premières et deuxièmes zones.
